Europäisches Patentamt

European Patent Office

Office européen des brevets

(11) Publication number: **0 668 212 A1**

## EUROPEAN PATENT APPLICATION

(21) Application number: **95101886.0**

(22) Date of filing: **11.02.95**

(51) Int. Cl.⁶: **B64G 1/24**, G05D 1/08

(30) Priority: **16.02.94 US 195680**

(43) Date of publication of application:
**23.08.95 Bulletin 95/34**

(84) Designated Contracting States:
**DE FR GB IT**

(71) Applicant: **Hughes Aircraft Company**
**7200 Hughes Terrace**
**P.O. Box 45066**
**Los Angeles, California 90045-0066 (US)**

(72) Inventor: **Rosen, Harold A.**

700 New Hampshire Avenue,
N.W.
Watergate South 1010 W.,
D.C. 20037 (US)
Inventor: **Drolen, Bruce L.**
1430 N. Roosevelt Avenue
Pasadena, CA 91104 (US)

(74) Representative: **Otten, Hajo, Dr.-Ing. et al**
**Witte, Weller, Gahlert & Otten**
**Patentanwälte**
**Rotebühlstrasse 121**
**D-70178 Stuttgart (DE)**

(54) **Optical satellite attitude control system.**

(57) A spacecraft (24) and spacecraft attitude control system uses a control surface (60) exposed to solar radiation for attitude or momentum control. The control surface is composed of one plate at the end of each solar panel (30). The plates are electrochromic so that applying a particular voltage changes the plates from absorbing to reflecting, changing the effect of solar pressure on the plates and thereby imparting a corrective force to the spacecraft.

FIG. 1.

EP 0 668 212 A1

## BACKGROUND OF THE INVENTION

The present invention relates to spacecraft attitude control, and, more particularly to a method of compensating for the undesired effects of solar pressure or the like on the attitude of earth orbiting satellites and interplanetary spacecraft.

It is generally desirable in communication satellite applications, to fix a satellite's position and orientation (attitude) with respect to certain celestial bodies. For example, in satellite communications applications it is common to position the satellite in a geostationary orbit around the earth with the satellites solar panels directed toward the sun and the satellite's communications antennas directed toward the earth.

The position and orientation of a satellite in a geostationary orbit must be occasionally adjusted because forces resulting from solar pressure, oblateness of the earth, and solar and lunar gravitational perturbations eventually alter the satellite's position and orientation beyond acceptable limits.

Several techniques have been developed for compensating for these disturbing effects on satellites. For example, gas or ion powered thrusters can be briefly fired to return the satellite to its proper position and orientation. While this method works well when relatively large infrequent corrective maneuvers are needed, such as north/south stationkeeping, it is costly and inconvenient for frequent smaller attitude corrections.

Another technique which is frequently used to control a satellite's attitude employs an on-board momentum wheel. Such wheels are usable in at least two modes, in a fixed orientation relative to the satellite, or on a gimbaled platform. With a fixed momentum wheel, the satellite attitude errors are periodic when the external moments are periodic. The peak attitude errors are inversely proportional to the angular momentum of the wheel and directly proportional to the magnitude of the external moments. When there is a component of the external moment that has a fixed direction in space, or rotates with a yearly rather than a daily period, the attitude errors will increase with time until they reach an unacceptable limit. At this point, the attitude control thrusters must be employed to return the satellite's attitude within its desired range. In a typical satellite design, this use of the thrusters for attitude control is still much more frequent than for stationkeeping, even though the fuel required for attitude control is relatively small.

With a gimbaled momentum wheel, the satellite attitude errors due to external moments may be kept nulled even in the presence of external moments. This is accomplished by counteracting the external moments by the moments generated by gimballing the wheel, under the supervision of the attitude control system. For cyclical disturbances which cancel out over the course of a day, the gimbals can compensate for the disturbances and return at the end of the day to their initial positions. A disturbance with a fixed direction in space or a yearly period will cause the gimbal angles to grow with time and eventually reach their limits. Before this occurs, the spacecraft thrusters must be employed to exert external moments which, by action of the spacecraft's attitude control system, desaturate the gimbal angles and return the momentum wheel gimbals to their desired operating range. This use of the thrusters for attitude control is also more frequent than for stationkeeping in a typical design, if no other means of obtaining control moments is available.

Still other techniques are used to generate control moments. One such technique is the use of magnetically induced torques from coils or rods to react against the earth's magnetic field. This method is subject to the vagaries of the earth's magnetic field at geosynchronous altitude. Another method is solar sailing, in which the solar radiation pressure reacting on the solar panels is used to create the desired compensating moments. The control moments generated by solar sailing are typically obtained by deviating the orientation of at least one of the satellite's solar panels slightly from the normal sun tracking position. While solar sailing does not require the use of additional fuel for thrusters it does require that the solar panels be angled away from the sun, reducing the amount of power generated. Magnetic torque coils and rods consume power reducing the amount available for other purposes. However, both methods reduce fuel consumption, saving weight and extending the life of the spacecraft.

## SUMMARY OF THE INVENTION

The present invention allows attitude control corrections to be made without consuming fuel, reducing the power provided by the solar panels or consuming power produced by solar panels. It can easily be incorporated into a variety of different spacecraft designs and used with existing attitude control systems. In one embodiment, the invention encompasses a method for compensating for the effects of desired torque applied to a spacecraft having a control surface offset from the spacecraft center of mass where the control surface is exposed to solar radiation. First, the magnitude and the direction of the undesired torque to be compensated is determined, then an optical property of the control surface is electrically changed to interact with the solar radiation thereby creating a compensation torque to compensate for the undesired torque. The stack of electrically changing preferably comprises changing the reflectance of the control surface between a primarily absorptive state and a primarily reflective state. The control surface preferably comprises at least two plates one at the distal end of each of at least two solar panels that extend in opposite directions from the spacecraft center of mass. The step of electrically changing preferably comprises electrically changing an optical property of at least one of the plates so that the solar radiation on the plates creates a different torque at each plate.

In another embodiment, the invention encompasses an attitude control system for a spacecraft having a main body and an electric power supply. The attitude control system has a control surface connected at the main body at a location displaced from the spacecraft's center of mass that is subjected to solar radiation when the spacecraft is in use. This control surface has an electrically changeable optical property. A switch between the power supply and the control surface changes the electrical property of the control surface for changing the force exerted upon the control surface by the solar radiation when the control surface is exposed to solar radiation. Preferably, the control system also includes a sensor for determining the attitude of the spacecraft and a processor connected to the sensor for comparing the attitude of the spacecraft as measured by the sensor with a desired attitude and controlling the switch so that the force exerted upon the control surface exerts a force upon the spacecraft to diminish the difference between the measured attitude and the desired attitude. The control surface preferably is an electrochromic layer having a first layer with a changeable transmittance and a second layer for reflecting radiation which travels through the first layer.

BRIEF DESCRIPTION OF THE DRAWINGS

In the accompanying drawings where the like numerals refer to similar components in the various embodiments and figures:

FIG. 1 is a perspective diagrammatic view of a satellite having a pair of sun-tracking solar panels suitable for practicing the preferred form of the method of the present invention.

FIG. 2 is a perspective diagrammatic view showing the satellite of FIG. 1 in geosynchronous orbit around the earth as well as some associated vector forces acting on the satellite due to solar pressure.

FIG. 3 is a cross-sectional diagrammatic view of an electrochromic device suitable for use in a control surface of the present invention.

FIG. 4 is a block diagram of an attitude control system for the satellite of FIG. 1, which is suitable for the present invention.

DETAILED DESCRIPTION OF THE INVENTION

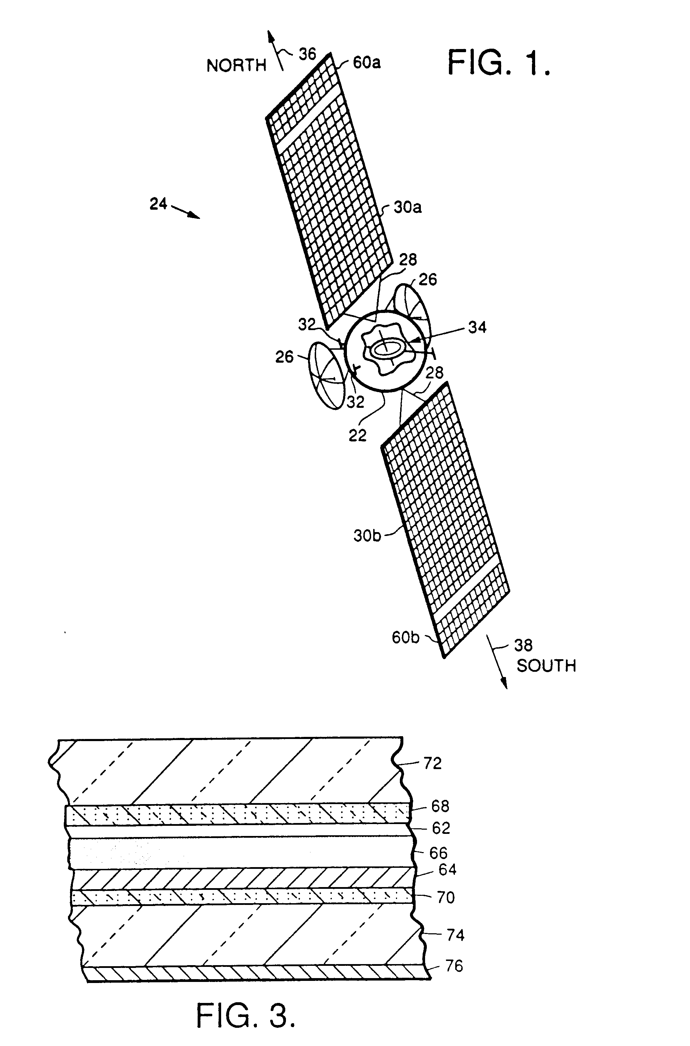

In accordance with the present invention, a typical communications satellite 24 is shown in FIG. 1 having a main body 22, communications antennas 26 on opposite sides of the main body, two solar panels 30a, 30b, thrusters 32 mounted at various locations on the main body exterior, and a two-axis gimbaled momentum wheel 34 housed within the main body. The solar panels 30 extend in generally opposite directions away from each other and are preferably maintained in a northern and southern orientation 36, 38 respectively. Each panel 30 is mounted to the satellite 24, by means of a strut 28 which is connected to a solar panel drive motor (not shown), for rotation about a common axis. Attitude stabilization of the satellite 24 is achieved by means of the momentum wheel 48 of a conventional type which may include gimbal mounting thereof with respect to two axes preferably pitch and roll. The use of two-axis gimbal wheel mounting of the momentum wheel 48 provides high-precision attitude control which allows compensation for externally applied, disturbing torques, simply by altering the attitude of the momentum wheel about either or both of the two axes. Changing the rotational speed of the wheel alters the spacecraft's attitude about the third axis, the yaw axis.

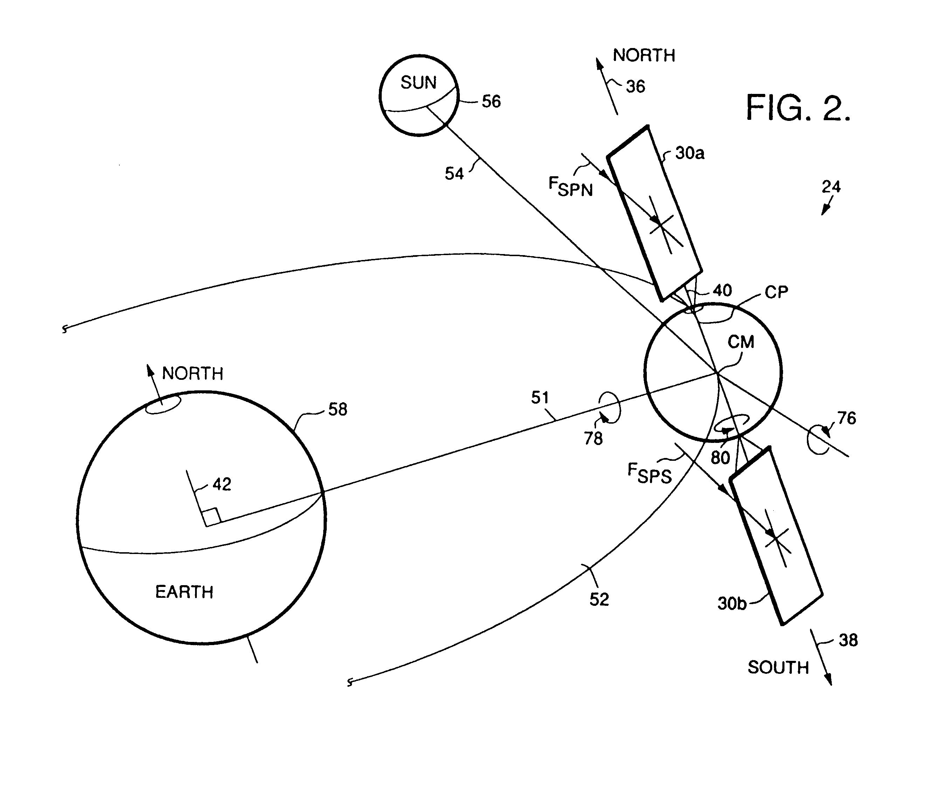

Referring now also to FIG. 2, the central axis 40 of the satellite 24 extends generally parallel to the earth's 58 rotational axis 42. Forces dues to radiation from the sun 56 bearing on the northern solar panel 30a are grouped together and designated as $F_{SPN}$ while forces due to solar pressure on the southern solar panel 30b are shown as the vector $F_{SPS}$. Solar pressure also bears upon the antenna reflectors (not shown in FIG. 2) and the main body. Solar radiation acts along the sun line 54 directly upon the spacecraft rendering every surface of the spacecraft which faces the sun 56 a solar pressure lever arm against the spacecraft center of mass. The solar panels generally have the greatest effect because of their area and distance from the spacecraft center of mass. However, this depends on the configuration of the spacecraft. If the satellite solar panels were to remain perfectly rigid, and the satellite were otherwise symmetric, the center of pressure caused by solar radiation might generally coincide with the satellite's center of mass and no net torque would be imparted to the satellite due to solar pressure. However, thermally induced bending of the solar panels together with other asymmetries cause the center of pressure to shift typically in a north-south direction; this is especially true during or near the summer and winter solstices. Consumption of the stationkeeping fuel over the life of the satellite can also cause a displacement between the satellite's center of pressure and center of mass. The solar radiation torque resulting from displacement between the center of pressure and center of mass has a generally consistent direction relative to the sun. In the absence of compensating attitude control, this solar pressure introduces attitude errors or gimbal angle motion which would eventually saturate gimbal travel and render the spacecraft useless.

Preferably, the spacecraft also includes a control surface consisting of a pair of plates 60a, 60b (see e.g. FIG. 1), one at the distal or remote end of each solar panel. The plates are made of a material with a changeable transmittance, reflectance, or absorbance so that the effect of the solar pressure applied against the plates can be changed. The plates are preferably as far away from the spacecraft's center of mass as possible. While the control surface is preferably applied to the ends of the solar panels, the plates can also be mounted on booms, antennas or the main body.

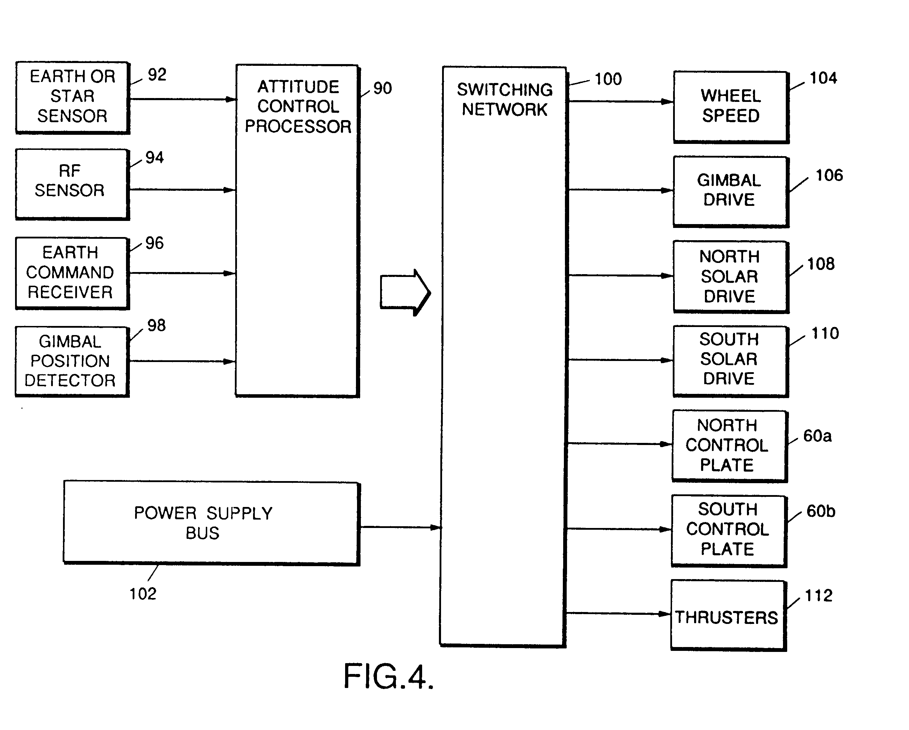

The effect of the solar pressure attitude is a function on the distance between the force's center of pressure and the spacecraft's center of mass. The distal ends of the solar panels are the surfaces furthest from the spacecraft's center of mass. The force of the solar pressure is a function of the incident flux of photons (a relative constant in the case of the sun), the projected area of the surface relative to the direction of incidence, and the surface's radiation characteristics. A black absorbing surface collects the full momentum of the incident photons while a perfect mirror-like (specular) reflector receives twice the momentum of the incident photons. Preferably, the plates are electrically switchable between absorbing and reflecting states and consume very little power. Two examples of such devices are electrochromics and liquid crystals. Examples of possible electrochromic systems would be those developed by EIC Laboratories, of Norwood Massachusetts which are thin film devices deposited on a glass substrate (see FIG. 3). The devices can be produced in a variety of sizes but are preferably in the form of small tiles 2cm X 5cm or 5cm X 5cm in area. An example of such a tile has a cathodically-coloring electrochromic layer ($H_xWO_3$ or $Li_xWO_3$) (62) and an anodically-coloring counter electrode layer ($I_rO_2$ or $V_2O_5$) (64), separated by a polymeric ion conductor layer (66). These layers are deposited between conductive layers 68, 70 of indium-tin-oxide or some other conductor and outer glass or silica substrates 72, 74. Such an electrochromic device can be electrically switched from a substantially transmitting state by applying a voltage of one polarity to the electrochromic layer to a substantially absorbing state by applying a voltage with the opposite polarity. Once the tiles have switched, no further power is necessary to maintain the state. In order to maximize the variation in the force produced by solar pressure on the device a silver or other reflective coating layer (76) is applied to the bottom substrate layer. Accordingly, when the device is transmissive, light travels through all but the bottom reflective layer and is reflected back away from the device. When the electrochromic layer is switched to its absorbant state substantially all of the light is absorbed before it reaches the reflective layer.

The electrochromic devices are preferably in the form of tiles which are similar in size and weight to the solar cells which make up the solar panels. This allows the electrochromic devices to be fastened to the same backing as is commonly used for the solar cells, typically an aluminum or composite material. The solar panels are assembled so that the outermost rows of elements on the distal end of each panel are electrochromic devices instead of solar cells. If the solar panels are driven to maximize the amount of power generated by the panels so that the panels are oriented directly toward the sun then the effect of the electrochromic devices is also maximized. If, on the other hand, the solar panels are oriented at an offset angle with respect to the sun, then the effectiveness of the electrochromic devices is reduced but the attitude disturbance created by the solar panels is also reduced so that for a typical three axis body-stabilized satellite of the type shown in FIG. 1, the system automatically compensates for solar panel angles. Similarly, solar panel angles can be used to modulate the amount of torque produced by the control surface.

The tiles within each plate of the control surface can be used in groups to create variable amounts of control or can simply be wired together as a single panel. By putting one of the plates into a transmissive state and the other into a reflective state, a differential torque can be derived from the solar pressure incident on the plates. Assuming a desired torque of approximately five $\mu$N-m, the dimensions of the plate can be derived by:

$$L = L_0 - \sqrt{L_0^2 3\Delta T / (Pw\Delta\rho)}$$

where typical values might be

L =      length of control surface plate mounted at end of panel

$L_0$ =      length from C.M. to the end of the panel, = 12.9m for a typical 4-panel spacecraft

$\Delta T$ =      torque requirement = 5$\mu$N-m

P =      solar pressure = $4.644 \times 10^{-6}$ N/m$^2$

w =         solar panel width = 2.16m

$\Delta\rho$ =       achievable change in reflectance by the control surface

Different control surface materials may produce different amounts of change in reflectance. The following table gives the size of the plate at the end of each solar panel for a range of $\Delta\rho$'s:

$\Delta\rho$ L, meters

0.2 0.293

0.4 0.146

0.6 0.097

0.8 0.073

For a typical electrochromic device such as the one described above, a plate 10 to 15 centimeters long and 2.16m wide is enough to produce a sufficient torque. The amount of attitude correction can be controlled by the amount of time that the difference in reflectivity of the two plates is maintained. A small torque applied over a long period reduces the shock to the spacecraft.

Given the configuration and orbital path shown in the drawings, the direction of the applied torque with respect to the axes of the spacecraft can be changed by creating a torque at different times during the spacecraft's orbit. In a standard orbit, the solar panels are driven to track the sunline 54 (FIG. 2) while the spacecraft's main body rotates with respect to the solar panels to track a direct line 51 from the satellite to the earth. The spacecraft's roll 76, yaw 78 and pitch 80 axes are defined with respect to the satellite's flight path 52 around the earth. Torques about both the roll and pitch axes can be created as long as the satellite stays in a north-south orientation. In other orientations other torques can be created.

FIG. 4 shows a modern attitude control system, preferably integrated into the satellite for use in practicing the invention. The control system includes an attitude control processor 90 which is coupled to an earth or star sensor 92 or both from which it receives information regarding the pitch and roll angles of the satellite 24. Where greater precision or a different type of data is required, an RF sensor 94 is coupled to the processor to provide data regarding pitch, roll and yaw angles of the satellite 24. An earth command receiver 96 receives commands from the earth regarding attitude changes or measurements. The receiver is coupled to the processor and provides these commands to the processor. In the case of a body stabilized satellite with gimbaled momentum wheels, a gimbal position detector 98 integrated into the gimbaled momentum wheel system is also coupled to the processor to provide information on the positions of the gimbals for each axis of the gimbals.

The processor 90 processes the data received from the sensors 92, 94, 96 and 98 in accordance with programmed instructions and provides output signals to a switching network 100. The switching network 100 is coupled to solenoids and other sorts of actuators to affect the operation of the various attitude controllers of the satellite. The switching network is also coupled to a power supply bus 102 to provide power to drive the various attitude controllers. In particular, the switching network is coupled to a momentum wheel speed controller 104 which controls the speed of the momentum wheel. It is coupled to the gimbal drives 106 to move the spacecraft body with respect to the spinning momentum wheel. It is coupled to the north and south solar panel drives 108, 110 to control the angle of the spacecraft solar panels with respect to the sunline. It is coupled to the north and south control surface plates 60a, 60b to change the optical properties of the plates and it is coupled to thrusters and thruster actuators 112 for attitude control and stationkeeping operations.

The attitude control processor can be programmed in a variety of different ways depending on the performance criteria for the spacecraft and the position of the control surface 60. The processor can be programmed to perform specified maneuvers at particular times during an orbit or to act on a thresholding basis so that when attitude is perturbed beyond a particular point, a attitude control maneuver is initiated. The attitude control system can be operated directly from the ground or it can be done autonomously by the spacecraft without interaction with a ground station. A variety of different sensors can be used to determine attitude and a variety of different approaches can be taken to calculate an estimate of the attitude from the signals received from the sensors. Preferably, the control processor is programmed with a specific desired attitude so that it first compares the desired attitude to that which is measured by or estimated from the sensors. The processor then calculates an appropriate maneuver for minimizing the difference between the measured or estimated attitude and the programmed desired attitude. In the case of a gimbaled momentum wheel the processor is preferably programmed with a gimbal position range near the center of gimbal travel. The processor can then compare the measured gimbal position with the desired gimbal position and calculate an appropriate torque which will allow the processor to drive the gimbals back to the desired position range while still maintaining appropriate satellite attitude.

Other control surface configurations are also possible. If a spacecraft has a predefined solar pressure imbalance because of its geometry or reflectors, a control surface can be applied in one position offset from the center of mass in order to counter the effect of the known imbalance. The optical properties of the control surface can be varied to either provide a resulting torque in one direction or the other relying on the solar pressure imbalance to create an opposing torque.

A variety of different control surface materials can be used instead of the electrochromic devices described above. Liquid crystals and polymer dispersed liquid crystal films are two examples. In addition, the control surface can be configured differently so that instead of changing the control surface from reflecting to absorbing, the control surface can be changed in other ways. Transmittance, absorbance and reflectance can all be varied to suit different applications. The greatest change in solar pressure effect occurs when a control surface can be changed from transmitting, in which no torque is applied to the control surface, to reflecting, in which a torque twice that of a solid absorbing panel is applied. A control surface can also be configured to transition between the three modes of transmitting, reflecting and absorbing to create still more control ability.

A wide variety of other modifications and additions can be made to the embodiment described above. The spirit and scope of the present invention, should not be limited to the embodiment described above but only by the claims which follow.

**Claims**

1. A method for compensating for the effects of undesired torque applied to a spacecraft (24) having a control surface (60) offset from the spacecraft's center of mass (CM), the control surface (60) being exposed to solar radiation, comprising the steps of:

   determining the magnitude and direction of the undesired torque to be compensated;

   electrically changing an optical property ($\rho$) of the control surface (60) to interact with the solar radiation and thereby create a compensation torque to compensate for the undesired torque.

2. The method of claim 1, characterized in that the step of electrically changing comprises electrically changing the reflectance ($\rho$) of the control surface (60) between a primarily absorptive state and a primarily reflective state.

3. The method of claim 1 or claim 2, characterized in that the step of electrically changing comprises electrically changing the transmittance of a first layer (62) of the control surface (60) between a primarily transmitting state in which the solar radiation is allowed to substantially travel through the first layer (62) and impinge upon and be reflected by a second layer (76) of the control surface (60) and a primarily absorptive state in which the solar radiation is substantially absorbed by the first layer (62).

4. The method of any of claims 1 - 3, characterized in that the step of electrically changing comprises applying an electric current to an electrochromic surface (62) of the control surface (60).

5. The method of any of claims 1 - 4, characterized in that the control surface (60) comprises at least two plates (60a, 60b), one at the distal end of each of at least two solar panels (30a, 30b) extending in opposite directions from the spacecraft center of mass (CM) and that the step of electrically changing comprises electrically changing an optical property of at least one of the plates (60a, 60b) so that the solar radiation on the plates (60a, 60b) creates a different torque at each plate (60a, 60b).

6. The method of any of claims 1 - 5, characterized in that the step of determining the magnitude and direction comprises measuring the roll and pitch angles of the spacecraft (24).

7. An attitude control system in a spacecraft (24) having a main body (22) and an electric power supply, comprising:

   a control surface (60) connected to the main body (22) at a location displaced from the spacecraft's center of mass (CM) that is subject to solar radiation when the spacecraft (24) is in use, the control surface (60) having an electrically changeable optical property ($\rho$); and

   a switch (100) between the power supply and the control surface (60) for changing the optical property ($\rho$) of the control surface (60) for changing the force exerted upon the control surface (60) by the solar radiation when the control surface (60) is exposed to solar radiation.

8. The system of claim 7 further characterized by:

   at least one sensor (92-98) for determining the attitude of the spacecraft (24); and

   a processor (90) connected to the sensor (92-98) for comparing the attitude of the spacecraft (24) as measured by the sensor (92-98) with a desired attitude and controlling the switch (100) so that the force exerted upon the control surface (60) exerts a force upon the spacecraft (24) to diminish the difference between the measured attitude and the desired attitude.

9. The system of claim 7 or claim 8, characterized in that the at least one sensor (92-98) comprises an earth sensor (92) and a sun sensor (92).

10. The system of any of claims 7 - 9, characterized in that the electrically changeable optical property ($\rho$) comprises the reflectance ($\rho$) of the control surface (60), the reflectance ($\rho$) being changeable between a primarily absorptive state and a primarily reflective state.

11. The system of any of claims 7 - 10, characterized in that the control surface (60) comprises:

a first layer (62) having a transmittance electrically changeable between a primarily transmitting state in which the solar radiation is allowed to substantially travel through the first layer (62) and a primarily absorptive state in which the solar radiation is substantially absorbed by the first layer (62); and

a second reflective layer (76) for reflecting radiation which travels through the first layer (62).

12. The system of any of claims 7 - 11, characterized in that the control surface (60) comprises an electrochromic layer (62).

13. The system of claim 7, characterized in that the control surface (60) comprises a liquid crystal diode layer.

14. The system of any of claims 7 - 13, characterized by at least one solar panel (30) extending from the main body (22) and that the control surface (60) is connected to the solar panel (30).

15. The system of any of claims 7 - 14, characterized by a solar panel (30a, 30b) extending from each of two opposite sides of the main body (22) and that the control surface (60) comprises a plate (60a, 60b) connected to the distal end of each of the solar panels (30a, 30b).

16. The system of claim 15, characterized in that the solar panels (30a, 30b) comprise a plurality of solar cells applied to a solar panel substrate and the plates (60a, 60b) comprise a plurality of tiles fastened to the solar panel substrate adjacent the solar cells.

17. The system of any of claims 7 - 16, characterized by:

a gimbaled momentum wheel;

a gimbal position detector (98) for measuring the position of the gimbals supporting the gimbaled momentum wheel; and

a processor (90) coupled to the detector (98) for comparing the position of the gimbals to a desired gimbal position and controlling the switch (100) so as to reorient the spacecraft (24) to permit the difference between the detected gimbal position and the desired gimbal position to be diminished.

18. A spacecraft comprising the attitude control system according to any of claims 7 - 17.

# FIG. 1.

# FIG. 3.

FIG. 2.

FIG.4.

EP 0 668 212 A1

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | DE-A-25 37 577 (TRÜMPER) * page 2, line 7 - page 4, line 8; page 5, line 20 - page 8, line 31; claims 1, 2, 12; figures 1-3 * | 1 | B64G1/24 G05D1/08 |
| P,X | US-A-5 305 971 (DECANINI) * the whole document * | 1-16 | |
| A | US-A-5 185 182 (BROWN) * abstract; column 1, lines 17 - 66; column 2, line 55 - column 3, line 10; column 3, line 58 - column 4, line 68; figures 1-3 * | 11,12 | |
| A | DE-A-31 46 701 (LICENTIA-PATENTVERWALTUNGS-GMBH) * abstract; page 5, line 17 - page 6, line 22; figures 1-3 * | 11,12 | |
| A | WO-A-93 22707 (THE REGENTS OF THE UNIVERSITY OF CALIFORNIA) * abstract; page 1, line 19 - page 5, line 6; figures 1-3 * | 11,12 | **TECHNICAL FIELDS SEARCHED** (Int.Cl.6) B64G G05D |
| A | JOURNAL OF GUIDANCE, CONTROL AND DYNAMICS, vol.17, no.1, 1 January 1994, NEW YORK US pages 48 - 54 XIONG ET AL. 'Effects of Solar Radiation Pressure on the Tethered Antenna/Reflector Subsatellite System' * abstract; introduction ; figure 1 * | 1 | |
| A | EP-A-0 435 708 (AEROSPATIALE SOCIETE NATIONALE INDUSTRIELLE) * abstract; page 3, line 1 - page 7, line 14; figures 1-3 * | 7,17 | |

-/--

The present search report has been drawn up for all claims

| Place of search | Date of completion of the search | Examiner |
|---|---|---|
| BERLIN | 23 May 1995 | Beitner, M |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | US-A-3 057 579 (CUTLER ET AL.)<br>* the entire document *<br>----- | 1 | |

TECHNICAL FIELDS
SEARCHED     (Int.Cl.6)

The present search report has been drawn up for all claims

| Place of search | Date of completion of the search | Examiner |
|---|---|---|
| BERLIN | 23 May 1995 | Beitner, M |